# EUROPÄISCHE PATENTSCHRIFT

(11) **EP 1 155 249 B1**
(45) Veröffentlichungstag und Bekanntmachung des Hinweises auf die Patenterteilung: **17.07.2002**
(21) Anmeldenummer: 00909025.9
(22) Anmeldetag: 09.02.2000
(51) Int. Cl.: F16H 19/00, B25J 9/00

(54) **ANTRIEBSEINRICHTUNG FÜR EINEN POSITIONIERARM**
DRIVE MEANS FOR A POSITIONING ARM
DISPOSITIF D'ENTRAINEMENT POUR UN BRAS DE POSITIONNEMENT

(30) Priorität: 26.02.1999 DE 19908431
(43) Veröffentlichungstag der Anmeldung: 21.11.2001
(73) Patentinhaber: Siemens Dematic AG, 90475 Nürnberg (DE)
(72) Erfinder: RODERER, Helmut, D-82515 Wolfratshausen (DE)
(74) Vertreter: Berg, Peter
(86) Internationale Anmeldenummer: DE0000389
(87) Internationale Veröffentlichungsnummer: WO0052359

(56) Entgegenhaltungen:
- DE-A- 3 048 572
- GB-A- 2 274 719
- US-A- 4 524 520

## Beschreibung

Die Erfindung bezieht sich auf eine Antriebseinrichtung für einen Positionierarm mittels zumindest eines Zahnriemens, der über mitlaufende Umlenkrollen des Positionierarmes geführt ist.

Eine derartige Antriebseinrichtung ist z.B. durch die DE 3048572 C1 bekannt geworden. Danach weist eine Positionierachse einen an seinen Enden festgelegten Zahnriemen auf. Ein entlang der Achse zu verfahrendes Positionierteil ist mit einem Antriebsmotor versehen, über dessen Antriebsrad der Zahnriemen geführt ist. Der Zahnriemen ist ferner über Umlenkrollen geführt, die eine Ω-artige Umschlingung des Antriebsrads ermöglichen.

Es ist üblich, Positionierarme nur auf einer Seite zu führen und anzutreiben und das andere Ende ungerührt zu lassen. Bei den schnellen Verfahrvorgängen insbesondere beim Bestücken von Leiterplatten kommt es zu rapiden Bremsvorgängen, die zu lästige Schwingungen im Positionierarm erzeugen.

Bei Bearbeitungsmaschinen ist es üblich, zu beiden Seiten der Traverse Antriebsachsen auszubilden, die über eine Verbindungswelle gekoppelt sind. Derartige Verbindungswellen begrenzen jedoch den Bewegungsbereich der Traverse.

Durch die gattungsgemäße US 4524520 A ist eine Positioniereinrichtung mit einem an beiden Enden mittels Zahnriemen angetriebenen Positionierarm bekannt geworden. Dabei sind die an beiden Enden festgelegten Zahnriemen jeweils über feste Umlenkrollen und am Positionierarm gelagerte Führungsrollen in omega-artiger Umschlingung gelegt, wobei eine der Umlenkrollen mittels einer Antriebswelle elektromotorisch angetrieben ist. Die Antriebsswelle ist nach Fig. 2 zur gegenüberliegenden Seite des Positionierarms verlängert und verbindet so die beiden Antriebe. Beim Bestücken der Leiterplatten wird der unter dem Positionierarm gelegene Raum für diverse Funktionen z.B. für den Transport der Leiterplatten benötigt, so daß eine derartige Verbindungswelle eine Störstruktur darstellt, die die konstruktive Gestaltungsfreiheit begrenzt.

Ferner ist durch die GB 2 274 719 A ein Positioniersystem für einen X-Y-verfahrbaren Postionierkopf mit einem H-förmig umlaufenden, an zwei Umlenkrollen angetriebenen Zahnriemen bekannt geworden. Dabei können die beiden angetriebenen Umlenkrollen durch Kombination verschiedener Antriebszustände den Positionierkopf in beliebige Richtungen verfahren. Der lange Zahnriemen kann entsprechend großen elastischen Verformungen unterliegen, die die Positioniergenauigkeit beeinträchtigen.

Der Erfindung liegt die Aufgabe zugrunde, eine Anordnung zu schaffen, mit der der Positionierarm schnell und genau verstellt werden kann und die eine zweckmäßige Gestaltung des Positioniersystems ermöglicht.

Diese Aufgabe wird durch die Erfindung gemäß dem Patentsanspruch gelöst.

Durch die Anordnung der Antriebs-, Führungs- und Umlenkrollen im Antriebssystem kann der Positionierarm in der Art eines Flaschenzuges angetrieben werden, so daß die Drehbewegung des Motors zum Positionierarm hin untersetzt wird. Dies ergibt geringere Antriebskräfte und Antriebsmomente mit entsprechend höheren Beschleunigungskräften. Außerdem wird durch die Untersetzung die Positioniergenauigkeit des Positionierarms erhöht. Das Positioniersystem läßt sich in beiden Bewegungsrichtungen in gleicher Weise mit gleichen Wirkungen betreiben. Durch die Verlegung der Verbindungswellen in das Innere des Positionierarms wird erreicht, daß die beiden Antriebsseiten mit geringem Antriebs- und Steuerungsaufwand genau synchronisiert und positioniert werden und daß die Verbindungswellen keinerlei Störstrukturen im Positioniersystem bilden. Ferner werden die Antriebskräfte zur gegenüberliegenden Seite torsionsmindernd auf zwei Verbindungswellen verteilt. Außerdem werden die Antriebskräfte über die beiden zugehörigen Führungsrollen gleichmäßig auf die beiden Riemenhälften verteilt, wodurch die beiden Enden des Positionierarmes zueinander genauer ausgerichtet werden können.

Im folgenden wird die Erfindung anhand eines in der Zeichnung dargestellten Ausführungsbeispieles näher erläutert.

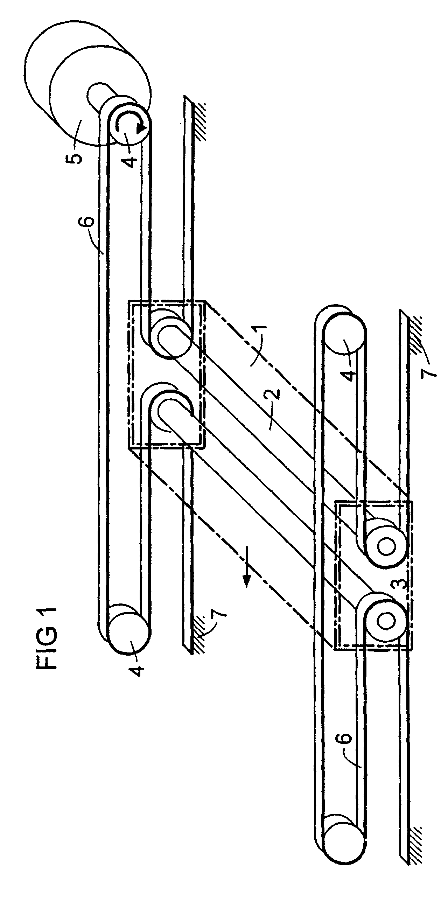

Figur 1 zeigt schematisiert eine perspektivische Ansicht eines Positioniersystems für einen Positionierarm.

Der z.B. in einem rechteckigen Hohlprofil gestaltete Positioeierarm 1 ist in seinem Inneren mit zwei zueinander parallelen durchgehenden Verbindungswellen 2 versehen. Diese tragen an ihren vorstehenden Enden Führungsrollen 3, die in der Bewegungsebene des Positionierarms 1 hintereinanderliegend angeordnet sind. Oberhalb der Führungsrollen 3 sind Umlenkrollen 4 angeordnet, von denen eine mit einem Antriebsmotor 5 gekoppelt ist.

Die beiden jeweils auf einer Seite des Positionierarms gelegenen Umlenkrollen weisen zueinander einen Abstand auf, der etwas größer ist, als der Verfahrweg des Positionierarms 1. Ein Zahnriemen 6 ist über die Führungsrollen 3 und die Umlenkrollen 4 Ω-artig geführt und mit seinen freien Enden unterhalb der Umlenkrollen 4 an einen Chassis 7 der Vorrichtung fixiert. Die rechte hintere Umlenkrolle 4 ist mit dem Antriebsmotor 5 verbunden, der den Zahnriemen 6 in der angegebenen Pfeilrichtung bewegt. Dadurch wird der Zahnriemen im linken Bereich des Antriebssystems verkürzt und im rechten Bereich verlängert. Dies bewirkt eine Antriebskraft auf den Positionierarm nach links entsprechend dem waagerechten Bewegungspfeil.

Durch die beiden Verbindungswellen 2 werden die Antriebskräfte gleichmäßig auf beide Seiten des Positionierarms 1 verteilt, was einen gleichmäßigen Spannungsverlauf der Zahnriemen 6 ergibt, so daß der Positionierarm 1 auf beiden Seiten vollkommen synchron und parallel bewegt werden kann. Durch die auf beiden Seiten gleichen Antriebs- bzw. Bremskräfte wird der Positionierarm auf beiden Seiten gehalten, so daß Schwingungen weitgehend vermieden werden.

## Patentansprüche

1. Antriebseinrichtung für einen Positionierarm (1) mittels zumindest eines Zahnriemens (6), der über mitlaufende Führungsrollen (3) des Positionierarms (1) geführt ist,
wobei an einem Ende des Positionierarms zwei in dessen Bewegungsrichtung hintereinanderliegende Führungsrollen (3) angeordnet sind,
wobei stationäre Umlenkrollen (4) im den Endbereiche des Verfahrwegs des Postionierarms (1) vorgesehen sind,
wobei die beiden Enden des Zahnriemens (6) in der Nähe der Umlenkrollen (4) an einem Chassis (7) der Vorrichtung festgelegt sind,
wobei eine der Umlenkrollen (4) mit einem Antriebsmotor (5) der Vorrichtung gekoppelt ist,
wobei der Zahnriemen (6) von den festgelegten Enden aus über die Führungsrollen (3) zu den Umlenkrollen (4) Ω-artig geführt ist,
wobei am anderen Ende des Positionierarms (1) weitere Führungsrollen (3) vorgesehen sind, über die ein zweiter Zahnriemen (6) geführt ist, der über ein zweites Paar von Umlenkrollen (4) läuft,
wobei die synchronisierten Führungs- und Umlenkrollen auf beiden Seiten des Positionierarms (1) zueinander paarweise kongruent angeordnet sind und
wobei die beiden Antriebsseiten trieblich miteinander verbunden sind,
**dadurch gekennzeichnet,**
**daß** für jedes Paar der Führungsrollen (3) eine Verbindungswelle (2) vorgesehen ist, die die Führungsrollen (3) zu beiden Seiten des Positionierarms (1) miteinander verbindet und durch das Innere des Positionierarms (1) verläuft.

## Claims

1. Drive means for a positioning arm (1) by means of at least one toothed belt (6), which is guided over co-running guiding rollers (3) of the positioning arm (1),
two guiding rollers (3) lying one behind the other in the direction of movement of the positioning arm being arranged at one end of the said positioning arm,
stationary deflecting rollers (4) being provided in the end regions of the travelling path of the positioning arm (1),
the two ends of the toothed belt (6) being fixed in the vicinity of the deflecting rollers (4) to a chassis (7) of the apparatus,
one of the deflecting rollers (4) being coupled to a drive motor (5) of the apparatus,
the toothed belt (6) being guided in a Ω-like manner from the fixed ends over the guiding rollers (3) to the deflecting rollers (4),
further guiding rollers (3) being provided at the other end of the positioning arm (1), over which rollers a second toothed belt (6), which runs over a second pair of deflecting rollers (4), is guided,
the synchronized guiding and deflecting rollers being arranged congruently in pairs with respect to one another on both sides of the positioning arm (1) and
the two drive sides being connected in drive terms to one another,
**characterized**
**in that** for each pair of guiding rollers (3) there is provided a connecting shaft (2), which connects the guiding rollers (3) on both sides of the positioning arm (1) to one another and runs through the interior of the positioning arm (1).

## Revendications

1. Dispositif d'entraînement pour un bras de positionnement (1), à l'aide d'au moins une courroie crantée (6) guidée par des galets de guidage (3) dudit bras de positionnement (1), animés d'un mouvement conjoint,
deux galets de guidage (3), disposés l'un derrière l'autre dans la direction du mouvement du bras de positionnement, étant disposés à une extrémité de ce dernier,
des galets fixes de renvoi (4) étant prévus dans les régions extrêmes de la course de déplacement du bras de positionnement (1),
les deux extrémités de la courroie crantée (6) étant verrouillées à demeure, à proximité des galets de renvoi (4), sur un châssis (7) du dispositif,
l'un des galets de renvoi (4) étant accouplé à un moteur d'entraînement (5) du dispositif,
la courroie crantée (6) étant guidée en décrivant un "oméga", par l'intermédiaire des galets de guidage (3), depuis les extrémités consignées à demeure jusqu'aux galets de renvoi (4),
d'autres galets de guidage (3) étant prévus à l'autre extrémité du bras de positionnement (1), galets par l'intermédiaire desquels est guidée une seconde courroie crantée (6) défilant sur une seconde paire de galets de renvoi (4),
les galets de guidage et de renvoi synchronisés étant agencés par paires spéculaires des deux côtés du bras de positionnement (1), et
les deux côtés menants étant en liaison mutuelle d'entraînement,
**caractérisé par le fait**
**qu'**il est prévu, pour chaque paire de galets de guidage (3), un axe de solidarisation (2) qui relie l'un à l'autre lesdits galets de guidage (3), des deux côtés du bras de positionnement (1), et qui s'étend à l'intérieur dudit bras de positionnement (1).
